## Europäisches Patentamt

## European Patent Office

## Office européen des brevets

(19)

(11) Veröffentlichungsnummer: **0 158 212**
**B1**

(12) **EUROPÄISCHE PATENTSCHRIFT**

(45) Veröffentlichungstag der Patentschrift:
29.11.89

(21) Anmeldenummer: 85103544.4

(22) Anmeldetag: 26.03.85

(51) Int. Cl.⁴: **C 08 J 9/08**

(54) Citronensäureester als Treibmittel zur Kunststoffverarbeitung.

(30) Priorität: 28.03.84 DE 3411319

(43) Veröffentlichungstag der Anmeldung:
16.10.85 Patentblatt 85/42

(45) Bekanntmachung des Hinweises auf die Patenterteilung:
29.11.89 Patentblatt 89/48

(84) Benannte Vertragsstaaten:
AT BE CH DE FR GB IT LI LU NL SE

(56) Entgegenhaltungen:
EP-A- 0 059 495
US-A- 3 657 166

Kirk-Othmer, 3 Auflage Band 6, Seite 172, Zeilen 28-30
WILEY INTERSCIENCE

(73) Patentinhaber: BOEHRINGER INGELHEIM KG,
Postfach 200, D-6507 Ingelheim am Rhein (DE)

(84) Benannte Vertragsstaaten: BE CH DE FR IT LI LU NL SE
AT

(73) Patentinhaber: BOEHRINGER INGELHEIM
INTERNATIONAL GmbH, Postfach 20, D-6507 Ingelheim
am Rhein (DE)

(84) Benannte Vertragsstaaten: AT BE CH DE FR GB IT LI LU
NL SE

(72) Erfinder: Kretzschmann, Günther, Berliner Strasse 17,
D-6531 Münster Sarmsheim (DE)
Erfinder: Scholz, Dieter, Im Brühl 76,
D-6535 Gau-Algesheim (DE)
Erfinder: Hilgert, Karl-Heinz, Hausgartenstrasse 19,
D-6507 Ingelheim (DE)

## Beschreibung

Die vorliegende Erfindung beschreibt die Verwendung von Citronensäureestern als Treib- und Nucleierungsmittel bei der Kunststoffverarbeitung.

Zur Herstellung geschäumter Kunststoffe werden Treibmittel in großem Umfang benutzt. Es ist bekannt, Citronensäure zusammen mit Natriumbicarbonat als Treibmittel anzuwenden (vgl. EP 0 059 495).

Außerdem werden Citronensäureester höherer Alkohole, wie Stearyl- oder Laurylcitrat, als Gleitmittel bei der Kunststoffverarbeitung eingesetzt.

Überraschenderweise wurde nun gefunden, daß bestimmte Ester der Citronensäure auch als Treib- und Nucleierungsmittel bei der Verarbeitung von Thermoplasten und Elastomeren verwendet werden können.

Dementsprechend schlägt die Erfindung vor, Mono- und/oder Diester der Citronensäure mit Alkoholen mit bis zu 8 Kohlenstoffatomen in reiner Form und/oder in Mischung mit anderen Treibmitteln und/oder in Zubereitungen mit geeigneten Hilfsstoffen und/oder eingekapselt oder eingeschlossen in Trägerstoffe als Treib- und/oder Nucleierungsmittel bei der Kunststoffverarbeitung zu verwenden.

Geeignet sind die Mono- und Diester von Alkoholen mit bis zu 8 Kohlenstoffatomen.

Als niedere Alkohole können eingesetzt werden:

Methanol, Ethanol, Propanol, Isopropanol, N-Butanol, iso-Butanol, sek-Butanol, tert-Butanol, n-Pentanol, n-Pentanol-2, n-Pentanol-3 und die isomeren Pentanole, n-Hexanol-1, n-Hexanol-2-, n-Hexanol-3- und die isomeren Hexanole, n-Heptanol-1, n-Heptanol-2, n-Heptanol-3, n-Heptanol-4 und die isomeren Heptanole, n-Octanol-1, n-Octanol-2, n-Octanol-3, n-Octanol-4 und die isomeren Octanole, Cyclopentanol und Cyclohexanol.

Außerdem können Diole oder Polyole mit bis zu 8 Kohlenstoffatomen wie z. B. Ethylenglycol, Glycerin, Pentaerythrit oder niedere Polyethylenglycole mit bis zu 8 Kohlenstoffatomen, wie z. B. Di-ethylenglycol, Triethylenglycol oder Tetraethylenglycol verwendet werden.

Hervorzuheben sind die Mono- oder Diester einwertiger Alkohole mit bis zu 6 Kohlenstoffatomen.

Bevorzugt sind die Mono- oder Diester einwertiger Alkohole mit bis zu 4 Kohlenstoffatomen.

Besonders bevorzugt sind die Monoester, wie Monomethylcitrat, Monoethylcitrat, Monopropylcitrat, Monoisopropylcitrat, Mono-n-butylcitrat und Mono-tert-butylcitrat.

Monoester im Sinne der vorstehenden Definition sind sowohl die Citronensäure-α-ester als auch die Citronensäure-β-ester oder Gemische von α- und β-Monoester beliebiger Zusammensetzung.

Durch Mischung der α- und β-Ester in beliebigen Verhältnissen können Gemische mit niedrigeren Schmelzpunkten als die der reinen Ester erhalten werden.

Diester im Sinne der vorstehenden Definition sind sowohl die α,α'-Diester der Citronensäure, als auch die α,β-Diester oder Gemische der α,α'- und α,β-Diester der Citronensäure.

Durch Mischung der α,α'- und α,β-Diester in beliebigen Verhältnissen können Gemische mit niedrigeren Schmelzpunkten als die der reinen Diester erhalten werden.

Diester im Sinne der vorstehenden Definition sind auch gemischte Ester zweier verschiedener Alkohole, wobei dieser Begriff alle möglichen konstitutionsisomeren und stereoisomeren Verbindungen in reiner Form oder in einem beliebigen Gemisch umfaßt.

Die beanspruchten Citronensäureester sind von flüssiger, wachsartiger oder fester Struktur. Sie können als Flüssigkeit, als Paste, als Feststoff oder als Schmelze allein und/oder als Mischung mit anderen Treibmitteln und/oder zusammen mit anderen Hilfsmitteln in Form geeigneter Zubereitungen eingesetzt werden, wie z. B. als Masterbatches, als Granulate, aufgezogen auf ein Trägergranulat oder können mit geeigneten Lösungsmitteln verdünnt sein.

Besonders hervorzuheben ist, daß Citronensäureester als nichttoxische Verbindungen unbedenklich eingesetzt werden können. Dieser Aspekt hoher Gebrauchssicherheit ist sowohl bei der Produktion von Kunststoffschäumen, wie auch bei dem späteren Endprodukt von wesentlicher Bedeutung.

Die beanspruchten Citronensäureester können in Thermoplast-Schmelzen in Konzentrationen von 0,1 bis zu 10%, insbesondere 0,1 bis 5% und bevorzugt von 0,3 bis 2,5% als Treibmittel, sowie von 0,05 bis 5,0%, insbesondere von 0,05 bis 2,5% und bevorzugt von 0,1 bis 1,5% als Nucleierungsmittel eingesetzt werden.

Die Werte der Wärmestreßbehandlung (Beispiel 1/Tabelle 1) zeigen, daß die erfindungsgemäßen Citronensäureester selbst bei 140 °C sich innerhalb von 2 Stunden nur unwesentlich zersetzen. Da die Ester technischer Reinheit bereits unterhalb dieser Temperaturgrenze schmelzen, können sie entweder als Flüssigkeiten direkt in die Thermoplastschmelze eingearbeitet oder aber mit anderen festen oder flüssigen Hilfsstoffen zu festen, pastenförmigen oder flüssigen Treibmittelzubereitungen unzersetzt weiterverarbeitet werden.

Das Wärmestreßexperiment erfaßt die durch chemische Zersetzung oder durch physikalische Vorgänge, wie Verdampfen oder Sublimieren, bewirkten Treibmitteleffekte einer Substanz. Wie die Ergebnisse der Untersuchungen zeigen, ist der Zersetzungsbereich der erfindungsgemäßen Citronensäureestern von der Substitution abhängig. Die Monoester zersetzen sich bei niedrigeren Temperaturen als die entsprechenden Diester.

Somit können durch die Auswahl geeigneter Ester Treibmittel bereitgestellt werden, die in bestimmten Temperaturbereichen vorteilhaft wirksam sind.

Der Temperaturbereich, innerhalb dessen Citronensäureester als Treibmittel oder als Nucleierungsmittel eingesetzt werden können liegt zwischen 160 °C und 300 °C, vorzugsweise zwischen 170 °C und 280 °C, besonders bevorzugt ist der Temperaturbereich von 180 °C bis 260 °C.

Die erfindungsgemäßen Citronensäureester können als Treib- und Nucleierungsmittel zur Herstellung von Kunststoffschäumen verwendet werden, wenn die Verarbeitungstemperatur des Kunststoffs zwischen 160 °C und 300 °C liegt, wobei kurzzeitig auch Temperaturen oberhalb 300 °C auftreten können.

Geeignete Kunststoffe sind z. B.:
Polyethylene;
Ethylen-Vinylacetat-Copolymerisate;
Ethylen-Ethylenacrylate;
ionomere Polyethylene;
Polypropylene;
Polybutene;
Polymethylpentene;
Polystyrole;
schlagfeste Polystyrole;
Styrol-Acrylnitril-Copolymerisate;
Acryl-Butadien-Styrol-Copolymerisate;
ASA; Polyvinylcarbazole;
Polyvinylchloride;
Polytrifluorethylene;
Polytetrafluorethylen-Perfluorpropylene;
Polyvinylidenfluoride;
Ethylen-Tetrafluorethylen-Copolymerisate;
Polymethylmethacrylate;
Polyamide;
Polyethylenglycolterephthalate;
Polybutylenterephthalate;
Polyoxymethylene;
Polycarbonate;
Chlorierte Polyether;
Phenoxy-Harze;
Polyphenylenoxide;
Polysulfone;
Polyethersulfone;
Polyphenylensulfide;
Polyurethan-Elastomere;
Celluloseacetate;
Cellulosepropionate;
Cellulose-Aceto-Butyrate
und andere Thermoplaste oder Elastomere.

Die Eignung der Citronensäureester als Treibmittel zeigt sich insbesondere durch den Vergleich der innerhalb von 10 min. bei Temperaturen von 180–260 °C freigesetzten Gasvolumina mit den Werten eines handelsüblichen Produkts.

Die Ergebnisse des in Beispiel 2 beschriebenen Experiments belegen, daß die Gasausbeuten der verschiedenen Citronensäureester den aus den Wärmestreß-Untersuchungen abschätzbaren Stabilitätsabstufungen entsprechen. Hervorzuheben sind die Citronensäuremonoester, welche Gasvolumina/kg Substanz ergeben, die den Werten eines handelsüblichen Produktes entsprechen, oder sie sogar übertreffen.

Besonders hervorzuheben ist dabei der Citronensäureisopropylester, dessen Gasausbeute bei 240 °C und bei 260 °C nahezu den doppelten Betrag des für das handelsübliche Produkt ermittelten Wertes beträgt.

Wie die in Tabelle 2 angegebenen Werte außerdem zeigen, setzt die Gasentwicklung der Citronensäureester erst im Temperaturbereich von 200 °C bis 220 °C bzw. von 220 °C bis 240 °C verstärkt ein.

Dieser Effekt kann vorteilhaft z. B. bei der Verarbeitung von Kunststoffen im Spritzgußverfahren genutzt werden, weil das Treibmittel schon im Einzugsbereich der Maschinen der Kunststoffschmelze zugefügt und in dieser Schmelze für einige Minuten auf Temperaturen bis über 200 °C erwärmt werden kann, ohne sich merklich zu zersetzen. Die Treibgasentwicklung setzt erst verstärkt im Bereich der Schnecke und der Düse ein, weil diese Elemente von Spritzgußmaschinen allgemein bei höheren Temperaturen gefahren werden als der Einzugsbereich. Demgegenüber zeigen die herkömmlichen Treibmittel kein so stark ausgeprägtes Temperaturprofil.

Bei der versuchsweise durchgeführten Herstellung eines Strukturschaum-Formteils aus Polystyrol werden bereits Einsparungen im Schußgewicht von 27,5% bis zu 42% erzielt (Beispiel 3/Tabelle 3), ohne daß die Betriebsbedingungen für den als Treibmittel verwendeten Citronensäureester optimiert wurden. Der Schaum hat in allen Fällen eine gleichmäßige grob- bis feinporige Struktur.

Die Eignung der erfindungsgemäßen Citronensäureester als Nucleierungsmittel wird durch die in Beispiel 4 beschriebene Herstellung einer Polystyrol-Schaumfolie mit Direktbegasung belegt.

Hervorzuheben ist, daß bei den praktischen Erprobungen der erfindungsgemäßen Citronensäureester keine Verfärbung des Kunststoffs oder Rückstände des Treibmittels erkennbar sind.

Wesentliches Kriterium für die Qualität geschäumter Kunststoffe ist die gleichmäßige Porung der Schaumstruktur, welche auf das gleichzeitige und gleichmäßige Wachsen von Zellkeimen zurückzuführen ist. Dem eigentlichen Treibmittel werden oftmals sogenannte «Nucleierungsmittel» zugesetzt, die die gewünschte Ausbildung kleinster Gasblasen induzieren. Der Begriff «Nucleierungsmittel» wird im Anmeldetext in diesem Sinne verwendet.

Daneben wird der Begriff «Nucleierungsmittel» in der Kunststofftechnologie auch für Mittel angewendet, die beim Erstarren von Kunststoffschmelzen zur Induzierung kristalliner Teilstrukturen im Polymer dienen, dies ist hier nicht gemeint.

Beispiel 1
Wärmestreß verschiedener Citronensäureester im Temperaturbereich von 80–240 °C.

3,0 g Citronensäureester werden in einem offenen Gefäß für 2 Stunden bei der angegebenen Temperatur belassen. Der Rest wird zurückgewogen und der Rückstand in % bezogen auf die eingesetzte Menge umgerechnet.

Die Ergebnisse der Untersuchungen sind in Tabelle 1 zusammengefaßt:

Tabelle 1

Wärmestreß von verschiedenen Zitronensäureestern je 2 Std. bei jeder Temperaturstufe, 3 g Einwaage, Rückstände in %

| Produkt | 2 Std. 80 °C | 2 Std. 100 °C | 2 Std. 120 °C | 2 Std. 140 °C | 2 Std. 160 °C | 2 Std. 180 °C | 2 Std. 200 °C | 2 Std. 220 °C | 2 Std. 240 °C |
|---|---|---|---|---|---|---|---|---|---|
| Monomethylcitrat | 100% | 100% | 99,3% | 96,0% | 87,6% | 58,3% | 15,3% | 5,3% | 3,6% |
| Monoethylcitrat | 100% | 100% | 99,3% | 95,3% | 89,0% | 64,6% | 19,3% | 6,0% | 3,3% |
| Mono-n-butylcitrat | 100% | 100% | 100% | 97,6% | 94,0% | 47,3% | 43,3% | 19,6% | 6,6% |
| Dimethylcitrat | 100% | 100% | 99,3% | 96,3% | 89,6% | 75,6% | 34,7% | 4,3% | 2,6% |
| Di-n-butylcitrat | 100% | 100% | 99,0% | 98,6% | 98,3% | 91,3% | 76,7% | 47,3% | 9,3% |
| Di-isopropylcitrat | 100% | 100% | 99,6% | 97,0% | 91,6% | 79,6% | 48,3% | 4,0% | 2,0% |
| Diethylcitrat | 98,4% | 98,2% | 98,0% | 96,0% | 89,6% | 71,2% | 43,2% | 23,0% | 8,6% |
| Monoisopropylcitrat | 100% | 99,2% | 98,4% | 96,4% | 86,2% | 41,4% | 11,0% | 4,6% | 4,4% |

**Beispiel 2**
Treibgasentwicklung verschiedener Citronensäureester.

Die Treibgasentwicklung der Citronensäureester wird im Temperaturbereich von 180–260 °C gemessen.

Eine Probe des entsprechenden Citronensäureesters wird 10 min. bei der angegebenen Temperatur belassen. In der Verweilzeit von 10 min. sind ca. 3 min. als dynamische Aufheizzeit von 20 °C bis zur Endtemperatur enthalten.

Zum Vergleich wird die Gasentwicklung eines handelsüblichen Citronensäure/Natriumhydrogencarbonatgemisches bestimmt.

Die ermittelten Gasmengen werden in l Gas unter Normalbedingungen/kg Substanz umgerechnet (Tabelle 2):

Tabelle 2

Gasentwicklung (Gasvolumen unter Normalbedingungen)

| Versuchsbedingungen* | Di-isopropylcitrat [l/kg] | Mono-n-butylcitrat [l/kg] | Monomethylcitrat [l/kg] | Monoethylcitrat [l/kg] | Di-n-butylcitrat [l/kg] | Dimethylcitrat [l/kg] |
|---|---|---|---|---|---|---|
| 10 Min.*/180 °C | 2,2 | 1,7 | 4,4 | 2,5 | 0,9 | 2,2 |
| 10 Min.*/200 °C | 3,6 | 3,7 | 7,9 | 4,7 | 2,6 | 3,2 |
| 10 Min.*/220 °C | 21,6 | 27,0 | 43,3 | 41,3 | 7,3 | 17,6 |
| 10 Min.*/240 °C | 51,6 | 70,8 | 102,9 | 100,1 | 28,2 | 38,7 |
| 10 Min.*/260 °C | 90,3 | 121,6 | 158,7 | 137,7 | 47,9 | 96,6 |

* In der Zeit von 10 Minuten sind 3 Minuten als dynamische Aufheizzeit von ca. 20 °C bis zur angegebenen Endtemperatur enthalten.

| Versuchsbedingungen | Diethylcitrat | Monoisopropylcitrat | Handelsübl. Produkt** |
|---|---|---|---|
| 10 Min.*/180 °C | 3,4 | 4,4 | 58,1 |
| 10 Min.*/200 °C | 6,5 | 21,0 | 96,4 |
| 10 Min.*/220 °C | 20,2 | 90,3 | 109,5 |
| 10 Min.*/240 °C | 45,2 | 228,5 | 128,4 |
| 10 Min.*/260 °C | 86,3 | 258,5 | 131,9 |

** Handelsübliches Treibmittel, bestehend aus einem Citronensäure/Natriumhydrogencarbonatgemisch.

**Beispiel 3**
Herstellung eines Strukturschaum-Formteils

Ein technisches Polystyrol-Granulat wird zu Strukturschaum-Formteilen verarbeitet. Als Treibmittel dienen verschiedene Ester der Citronensäure und ein handelsübliches Treibmittel aus Natriumbicarbonat und Citronensäure.

Die Schaumstruktur und das Schußgewicht der jeweiligen Formteile werden bestimmt:
Maschine: Battenfeld-Spritzgußmaschine
Verarbeitungstemperaturen:

| | |
|---|---|
| Einzugsbereich: | 190 °C |
| Schneckentemperatur: | 240 °C |
| Düsentemperatur: | 250 °C |

Formteil: Reibebrett mit Handgriff
Kunststofftyp: Polystyrol-Granulat, technisch

Tabelle 3

| Treibmittel | Treibmittel-gehalt [Gew.%] | Schußgewicht [g] | Gewichts-reduzierung [%] | Schaumstruktur |
|---|---|---|---|---|
| ohne Treibmittel | 0,0 | 394 | | keine, kompakt |
| Handelsübliches* Produkt | 1,0 | 232 | 41 | gleichmäßig, feinporig |
| Monomethylcitrat | 0,7 | 248 | 37 | relativ grobporig |
| Monoethylcitrat | 0,7 | 250 | 36,5 | grobporig, gleichmäßig |
| Monoisopropylcitrat | 0,7 | 227 | 42 | relativ grob, gleichmäßig |
| Di-n-butylcitrat | 0,7 | 275 | 30 | grob- bis feinporig |
| Diethylcitrat | 0,7 | 285 | 27,5 | grobporig, gleichmäßig |
| Diisopropylcitrat | 0,7 | 294 | 25 | relativ feinporig, gleichmäßig |
| Di-n-butylcitrat | 0,7 | 282 | 28,5 | relativ grobporig |

* Handelsübliches Treibmittel aus Natriumbicarbonat und Citronensäure

Beispiel 4
Herstellung einer Polystyrol-Schaumfolie.
    Die Verwendung von Citronensäureestern als Nucleierungsmittel wird bei der Herstellung einer Polystyrol-Schaumfolie unter Direktbegasung mit Frigen untersucht.
    Die Schaumstruktur und die Foliendichte werden bestimmt:
Maschine: Colombo-Extruder
Verbreitungstemperaturen:     Einzugsbereich: 210°
    Zone 2 (Direktbegasung mit Frigen) 202°
    Düse: 230°
Kunststofftyp: Polystyrol technisch
Produkt: Polystyrol-Schaumfolie
    Die Ergebnisse der praktischen Erprobung sind in der nachfolgenden Tabelle 4 zusammengefaßt:

Tabelle 4

| Nucleierungs-mittel | Nucleie-rungsmit-telgehalt [Gew%] | Foliendichte | Schaum-struktur |
|---|---|---|---|
| Handelsübliches* Produkt | 0,4 | 0,07 | mittelfein |
| Diethylcitrat | 0,375 | 0,06 | etwas grober |
| | 0,4 | 0,063 | mittelfein |
| Monoisopropylcitrat | 0,375 | 0,065–0,074 | etwas grober |

* Handelsübliches Treibmittel aus Natriumbicarbonat und Citronensäure

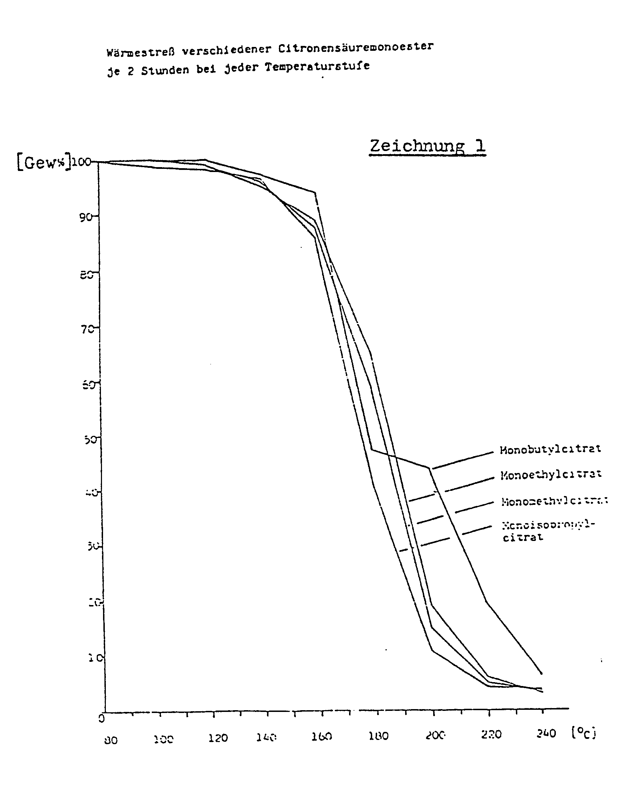

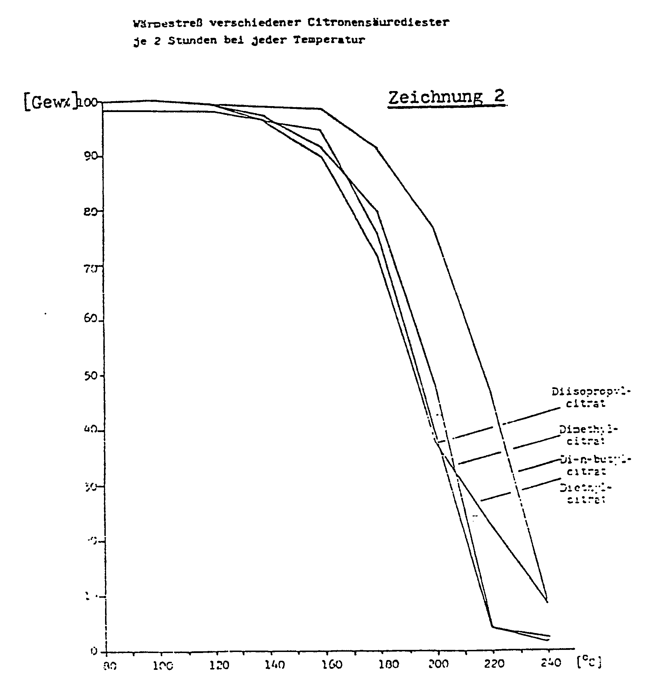

**Patentansprüche**

1. Verwendung von Mono- und/oder Diestern der Citronensäure mit Alkoholen mit bis zu 8 Kohlenstoffatomen in reiner Form und/oder in Mischung mit anderen Treibmitteln und/oder in Zubereitungen mit geeigneten Hilfsstoffen und/oder eingekapselt oder eingeschlossen in Trägerstoffe als Treib- und/oder Nucleierungsmittel bei der Kunststoffverarbeitung.

2. Verwendung nach Anspruch 1, dadurch gekennzeichnet, daß mindestens ein Mono- und/oder Diester der Citronensäure mit einwertigen Alkoholen mit bis zu 6 Kohlenstoffatomen benutzt wird.

3. Verwendung nach Anspruch 1 und 2, dadurch gekennzeichnet, daß mindestens ein Mono- und/oder Diester der Citronensäure mit einwertigen Alkoholen mit bis zu 4 Kohlenstoffatomen benutzt wird.

4. Verwendung nach Anspruch 1 bis 3, dadurch gekennzeichnet, daß Monoisopropylcitrat benutzt wird.

5. Verwendung nach Anspruch 1 bis 4, dadurch gekennzeichnet, daß das Treib- und/oder Nucleierungsmittel als Flüssigkeit oder als Schmelze zugegeben wird.

6. Verwendung nach Anspruch 1 bis 4, dadurch gekennzeichnet, daß die Arbeitstemperatur zwischen 160 und 300 °C liegt.

7. Verwendung nach Anspruch 1 bis 4, dadurch gekennzeichnet, daß das Treib- und/oder Nucleierungsmittel in Konzentrationen von 0,05% bis 10,0% eingesetzt wird.

8. Verfahren zur Herstellung von Kunststoffschäumen aus einem thermoplastischen Material, dadurch gekennzeichnet, daß Treib- und/oder Nucleierungsmittel gemäß Anspruch 1 bis 7 angewendet werden.

9. Verfahren zur Herstellung von Kunststoffschäumen aus einem thermoplastischen Material, dadurch gekennzeichnet, daß neben einem weiteren Treibmittel ein Nucleierungsmittel gemäß den Ansprüchen 1 bis 7 angewendet wird.

10. Treib- und/oder Nucleierungsmittel für die Kunststoffverarbeitung, gekennzeichnet durch einen Gehalt an mindestens einem Mono- und/oder Diester der Citronensäure mit Alkoholen mit bis zu 8 Kohlenstoffatomen in reiner Form und/oder in Mischung mit anderen Treibmitteln und/oder in Zubereitung mit geeigneten Hilfsstoffen und/oder eingekapselt oder eingeschlossen in Trägerstoffe, mit der Einschränkung, daß das Mittel nicht aus Monoisopropylcitrat allein besteht.

## Claims

1. Use of mono- and/or diesters of citric acid with alcohols having up to 8 carbon atoms in pure form and/or in admixture with other propellants and/or in preparations with suitable adjuvants and/or encapsulated or enclosed in carriers as propellants and/or nucleating agents in the working up of plastics.

2. Use according to claim 1, characterised in that at least one mono- and/or diester of citric acid with monohydric alcohols with up to 6 carbon atoms is used.

3. Use according to claim 1 and 2, characterised in that at least one mono- and/or diester of citric acid with monohydric alcohols with up to 4 carbon atoms is used.

4. Use according to claims 1 to 3, characterised in that monoisopropyl citrate is used.

5. Use according to claims 1 to 4, characterised in that the propellant and/or nucleating agent is added as a liquid or as a melt.

6. Use according to claims 1 to 4, characterised in that the working temperature is between 160 and 300 °C.

7. Use according to claims 1 to 4, characterised in that the propellant and/or nucleating agent is used in concentrations of 0.05% to 10.0%.

8. Process for preparing foam plastics from a thermoplastic material, characterised in that propellants and/or nucleating agents according to claims 1 to 7 are used.

9. Process for preparing foam plastics from a thermoplastic material, characterised in that in addition to another propellant a nucleating agent according to claims 1 to 7 is used.

10. Propellant and/or nucleating agent for working up plastics, characterised in that it contains at least one mono- and/or diester of citric acid with alcohols having up to 8 carbon atoms in pure form and/or in admixture with other propellants and/or in preparations with suitable adjuvants and/or encapsulated or enclosed in carriers, with the proviso that the agent does not consist of monoisopropyl citrate alone.

## Revendications

1. Utilisation de mono- et/ou diesters de l'acide citrique avec des alcools ayant jusqu'à 8 atomes de carbone sous forme pure et/ou en mélange avec d'autres agents moussants et/ou dans des préparations avec des adjuvants appropriés et/ou encapsulés ou enfermés dans des matières de support, en tant qu'agents moussants et/ou de nucléation dans le traitement ou la mise en œuvre de matières plastiques.

2. Utilisation selon la revendication 1, caractérisée en ce qu'on utilise au moins un mono- et/ou diester de l'acide citrique avec des mono-alcools ayant jusqu'à 6 atomes de carbone.

3. Utilisation selon la revendication 1 et 2, caractérisée en ce qu'on utilise au moins un mono-et/ou diester de l'acide citrique avec des mono-alcools ayant jusqu'à 4 atomes de carbone.

4. Utilisation selon la revendication 1 à 3, caractérisée en ce qu'on utilise du citrate de monoisopropyle.

5. Utilisation selon la revendication 1 à 4, caractérisée en ce que l'agent moussant et/ou de nucléation est ajouté sous forme de liquide ou sous forme de masse fondue.

6. Utilisation selon la revendication 1 à 4, caractérisée en ce que la température de travail se situe entre 160 et 300 °C.

7. Utilisation selon la revendication 1 à 4, caractérisée en ce que l'agent moussant et/ou de nucléation est mis en œuvre à des concentrations de 0,05% jusqu'à 10,0%.

8. Procédé pour la fabrication de mousses de matière plastique à partir d'une matière thermoplastique, caractérisé en ce que l'on utilise des agents moussants et/ou de nucléation selon la revendication 1 à 7.

9. Procédé pour la fabrication de mousses de matière plastique à partir d'une matière thermoplastique, caractérisé en ce que l'on utilise, outre un autre agent moussant, un agent de nucléation selon les revendications 1 à 7.

10. Agent moussant et/ou de nucléation pour la mise en œuvre ou le traitement des matières plastiques, caractérisé par une teneur en au moins un mono- et/ou diester de l'acide citrique avec des alcools ayant jusqu'à 8 atomes de carbone, sous forme pure et/ou en mélange avec d'autres agents moussants et/ou en préparation avec des adjuvants appropriés et/ou encapsulé ou enfermé dans des matières de support, avec la limitation selon laquelle l'agent n'est pas constitué de citrate de monoisopropyle seul.

Wärmestreß verschiedener Citronensäuremonoester
je 2 Stunden bei jeder Temperaturstufe

## Zeichnung 1

Monobutylcitrat
Monoethylcitrat
Monomethylcitrat
Monoisopropylcitrat

Wärmestreß verschiedener Citronensäurediester
je 2 Stunden bei jeder Temperatur

Zeichnung 2